# EUROPÄISCHE PATENTSCHRIFT

(11) **EP 3 067 188 B1**
(45) Veröffentlichungstag und Bekanntmachung des Hinweises auf die Patenterteilung: **01.08.2018**
(21) Anmeldenummer: 16154099.2
(22) Anmeldetag: 03.02.2016
(51) Int. Cl.: B29C 70/44, B29C 33/02, B29C 51/28, B29C 33/30

(54) **MINI-AUTOKLAV-VORRICHTUNG ZUR HERSTELLUNG VON KUNSTSTOFF-VERBUNDWERKSTOFFEN**
MINI-AUTOCLAVE DEVICE FOR THE PREPARATION OF PLASTIC COMPOSITE MATERIALS
DISPOSITIF MINIATURE AUTOCLAVE DESTINE A FABRIQUER DES MATIÈRES COMPOSITES EN PLASTIQUE

(30) Priorität: 09.03.2015 DE 102015103368
(43) Veröffentlichungstag der Anmeldung: 14.09.2016
(73) Patentinhaber: Piekenbrink Composite GmbH, 88471 Laupheim (DE)
(72) Erfinder: Piekenbrink, Olaf, 88471 Laupheim (DE); Piekenbrink, Björn, 88471 Laupheim (DE)
(74) Vertreter: Kiessling, Christian

(56) Entgegenhaltungen:
- CA-A1- 2 435 575
- DE-U1- 20 116 817
- US-A- 5 824 249

## Beschreibung

Die Erfindung betrifft eine Vorrichtung zum Verpressen von Kunststoff-Verbundwerkstoffen zur Herstellung von Formteilen, mit einem mittels eines Deckels gasdicht verschließbaren, mit Gas befüllbaren Hohlraum eines Hohlkörpers und mit mindestens einer Heizeinrichtung zum Aufwärmen des Hohlkörpers.

Zur Herstellung von Formteilen aus Kunststoff-Verbundwerkstoffen sind im Stand der Technik als Autoklav-Vorrichtungen bezeichnete massivwandige Druckbehälter bekannt, in die für einen Verpressungsvorgang jeweils eine Mehrzahl von Formteilen einbringbar ist. Bei einem Verpressungsvorgang werden die Formteile unter einem Druck von in der Regel mehreren Atmosphären gegen einen Formkörper gepresst und nehmen so ihre gewünschte Struktur und endgültige Formgebung an.

Die bekannten Autoklav-Vorrichtungen weisen indes den Nachteil auf, dass ihr Betrieb aufgrund ihres im Vergleich zu den Abmessungen der herzustellenden Formteile sehr großen Innenvolumens sehr energieaufwendig und damit mit hohen Kosten verbunden ist.

Die Druckschrift DE 201 16 817 U1 offenbart eine Vorrichtung zur Herstellung von faserverstärkten Kunststoffbauteilen mit einer dünnwandigen Wandstärke im Bereich von 0,2 mm bis 200 mm, mit:
- einer matrizenartigen Formunterseite;
- einer flüssigkeits- und/oder gasdichten, flexiblen und elastischen oder plastischen, transparenten oder nicht transparenten Abdeckung, welche zumindest oberhalb des formgebenden Abschnittes der Formunterseite vollständig oder abschnittsweise trennfähig an dieser oder an einem Spannrahmen oder an einer Druckglocke vorgesehen ist, wobei diese Abdeckung außerhalb des Randbereichs des formgebenden Abschnittes der Formunterseite mit der Formunterseite und/oder mit einem Spannrahmen und/oder mit einer Druckglocke flüssigkeitsdicht und/oder gasdicht in Verbindung steht oder flüssigkeitsdicht und/oder gasdicht in Verbindung bringbar ist;
- einer Verstärkungsfaserschicht, welche zumindest zwischen dem formgebenden Abschnitt der Formunterseite und der hierzu korrespondierenden Abdeckung flächendeckend oder abschnittsweise vorgesehen ist;
- einer Druckglocke, welche unter Überdruck mit einem flüssigen und/oder gasförmigen Medium beaufschlagbar die Abdeckung zumindest in dem formgebenden Abschnitt der Formunterseite und gegebenenfalls in den randwärts daran anschließenden Randbereichen mittelbar oder unmittelbar überragt, wobei die Druckglocke mit der dortigen Abdeckung mittelbar oder unmittelbar flüssigkeitsdicht und/oder gasdicht in Verbindung steht oder bringbar ist, um überflüssiges Reaktionsharz aus der Verstärkungsfaserschicht auszupressen sowie
- einem oder mehrerer Harzüberlaufkanäle in dem von der Abdeckung dicht überragten randwärtigen Bereich der Formunterseite für das Auffangen von durch die druckbeaufschlagte Abdeckung aus der Verstärkungsfaserschicht herausgepresstem Reaktionsharz und/oder ein oder mehrere gegebenenfalls stutzenartige sowie abdeckungsseitige und/oder formseitige Mittel zur Absaugung von durch die druckbeaufschlagte Abdeckung aus der Verstärkungsfaserschicht herausgepresstem Reaktionsharz und/oder zur Anlegung von Unterdruck.

Diese bekannte Vorrichtung hat zum Ziel die Bereitstellung dünnwandiger Kunststoffbauteile mit einem hohen Verstärkungsfaser-Volumenanteil, die auf besonders schnelle, einfache und kostengünstige Art und Weise eine Erhöhung des Verstärkungsfaser-Volumenanteils sowie eine Verringerung der Wandstärke und damit auch des Gewichtes von Faserverbund-Bauteilen erlaubt, welche den Einsatz kostengünstiger Materialien gestattet, insbesondere von trockenen, nicht arbeits- und zeitintensiven vorzutränkenden Verstärkungsfasern, welche die Herstellung von Kunststoffbauteilen mit einer porenfreien Oberfläche ermöglicht, wobei deren Energieverbrauch Betriebskosten, Anschaffungs- und Herstellungskosten besonders niedrig sein sollen.

Die Druckschriften CA 2 435 575 A1 und US 5 824 249 A offenbaren ebenfalls zwischen zum Verpressen mittels im Wesentlichen parallel zueinander ausgerichteten Druckkörpern angeordneter Formkörper.

Aufgabe der Erfindung ist es, eine Vorrichtung zum Verpressen von Kunststoff-Verbundwerkstoffen zur Herstellung von Formteilen zu schaffen, deren Betrieb insbesondere bei der Herstellung kleiner Stückzahlen gegenüber den bekannten Vorrichtungen deutlich kostengünstiger ist. Diese Aufgabe wird erfindungsgemäß durch eine Vorrichtung gemäß Anspruch 1 gelöst. Bevorzugte Ausführungsformen der Erfindung sind Gegenstand der Unteransprüche.

Bei der erfindungsgemäßen Vorrichtung wird durch die Kombination der Merkmale des kennzeichnenden Teils des Patentanspruchs 1 in Verbindung mit den Merkmalen seines Oberbegriffes die Möglichkeit eines Pressens von Kunststoff-Verbundwerkstoffen unter Druck von mehreren Atmosphären direkt gegen die Innenfläche des Hohlraums des Hohlkörpers als den formgebenden Formkörper geschaffen.

Das unter einen entsprechenden Druck zu setzende Volumen des Hohlraums des Hohlkörpers ist bei der erfindungsgemäßen Vorrichtung um mehrere Größenordnungen geringer als das Innenvolumen einer herkömmlichen Autoklav-Vorrichtung, und dementsprechend ist der Energieaufwand zur Aufbringung des Druckes geringer, der für die Erzeugung der gewünschten Struktur und endgültigen Formgebung eines Formstückes notwendig ist.

Die erfindungsgemäße Vorrichtung ist dabei insbesondere für eine Herstellung kleinerer Stückzahlen von Vorteil.

Gemäß einer ersten bevorzugten Ausführungsform der erfindungsgemäßen Vorrichtung ist vorgesehen, dass die Außenkontur des Formteils der Kontur der Innenfläche des Hohlraums des Hohlkörpers entspricht.

Die Abmessungen des Hohlkörpers sind an die Abmessungen des Formkörpers vorzugsweise so angepasst, dass das Volumen des massiven Teils des Hohlkörpers auf das zwei- bis vierfache des Volumens des Hohlraums des Hohlkörpers bemessen ist.

Der Hohlkörper kann aus einem massiven integralen Block hergestellt sein, wobei die genaue Ausbildung der Innenfläche des Hohlraums allerdings problematisch sein kann. Um diesen Nachteil zu beheben, kann der Hohlkörper aus einer Mehrzahl von massiven Blöcken hergestellt sein, wobei sich die Konturen der Innenflächen der einzelnen Blöcke dann zu der Kontur der Innenfläche des Hohlraums des Hohlkörpers ergänzen.

Bei einer Herstellung aus einer Mehrzahl von massiven Blöcken ist der Hohlkörper vorzugsweise aber nicht notwendigerweise aus drei zu einer kompakten Einheit zusammenfügbaren massiven Blöcken zusammengesetzt, wobei eine obere Grenzfläche eines den Deckel nicht kontaktierenden dritten Blocks an die jeweils unteren Grenzflächen von zwei sich seitlich jeweils kontaktierenden Blöcken angrenzt, deren jeweilige dem dritten Block ferne obere Grenzflächen dem Deckel gegenüberstehen.

Im Falle einer Herstellung eines Hohlkörpers aus insgesamt drei Blöcken können zwei sich seitlich jeweils kontaktierende Blöcke mit jeweils planer Außenkontur vorgesehen sein, um einen Hohlkörper mit quaderförmiger Außenkontur zu bilden. Alternativ können zwei sich jeweils seitlich kontaktierende Blöcke mit jeweils gebogener Außenkontur vorgesehen sein, um einen Hohlkörper mit zylinderförmiger Außenkontur zu bilden.

Ein jeder Block ist aus einem druckresistenten festen Material, insbesondere einem Metall wie vorzugsweise Stahl oder Aluminium oder auch Chrom hergestellt.

Gemäß einer weiteren bevorzugten Ausführungsform der erfindungsgemäßen Vorrichtung weist der Hohlkörper eine den Hohlraum von einer Außenfläche des Blocks trennende, an den Deckel angrenzende Dichtungszone auf, deren Breite bemessen ist, um eine gasdichte Schnittstelle zwischen dem Hohlkörper und dem Deckel zu bilden. Die Dichtungszone kann dabei im Wesentlichen plan oder zum Zweck einer Oberflächenvergrößerung gebogen ausgebildet sein, wobei im Bereich der Dichtungszone vorzugsweise eine als Aussparung des Hohlkörpers ausgebildete Umlaufnut vorgesehen ist.

Eine eigenständige oder zusätzliche Umlaufnut kann auch im Bereich des Hohlraumes des Hohlkörpers als Aussparung in dem Material des Hohlkörpers vorgesehen sein.

Ein Diaphragma ist vorzugsweise ausgebildet, um sich über die insgesamte Breite der Dichtungszone zu erstrecken. Bei Ausführungsformen des Hohlkörpers, bei denen im Bereich der Dichtungszone eine als Aussparung des Hohlkörpers ausgebildete Umlaufnut vorgesehen ist, ist das Diaphragma vorzugsweise mit einem Umlaufkeil versehen, der dimensioniert ist, um die Umlaufnut schlüssig auszufüllen. Das Diaphragma und auch die Umlaufnut sind vorzugsweise aus einem elastischen Kunststoffmaterial hergestellt.

Gemäß einer weiteren bevorzugten Ausführungsform der erfindungsgemäßen Vorrichtung enthält der Hohlkörper eine den Hohlraum von der Außenfläche des Blocks trennende Wandung, deren Dicke mindestens der Breite der Dichtungszone entspricht.

Ein Diaphragma erstreckt sich gemäß einer ersten bevorzugten Ausführungsform der Erfindung im Querschnitt von einem ersten Punkt der Außenwand des Blocks oberhalb der Dichtungszone über den Hohlraum bis zu einem dem ersten Punkt gegenüberliegenden zweiten Punkt der Außenwand des Blockes.

Gemäß einer zweiten bevorzugten Ausführungsform bildet ein Diaphragma unter teilweiser Angrenzung an das Formteil und teilweiser Angrenzung an eine Innenfläche des Deckels eine in sich geschlossene Einheit.

Gemäß einer wichtigen bevorzugten Ausführungsform der erfindungsgemäßen Vorrichtung ist im Bereich des Deckels eine Ventileinrichtung für einen bidirektionalen Gas-Transfer zwischen einer ambienten Gasquelle und dem Inneren des Hohlraums des Hohlkörpers vorgesehen. In der erfindungsgemäßen Vorrichtung ist mindestens eine Heizeinrichtung zum Aufwärmen des Hohlkörpers vorgesehen. Eine Platzierung einer Heizeinrichtung kann dabei in dem Material des Hohlkörpers, an mindestens eine Außenfläche des Hohlkörpers angrenzend oder auch innerhalb des Hohlraumes des Hohlkörpers erfolgen.

Vorzugsweise können zwei Heizeinrichtungen vorgesehen sein, wobei eine erste Heizeinrichtung an eine insgesamte Oberfläche des Deckels angrenzend platziert ist und eine zweite Heizeinrichtung an eine insgesamte Unterfläche des Hohlkörpers angrenzend platziert ist.

Des Weiteren kann vorzugsweise eine Mehrzahl von Heizeinrichtungen vorgesehen sein, wobei mindestens eine erste Heizeinrichtung im Material des Hohlkörpers untergebracht ist und mindestens eine zweite Heizeinrichtung in dem Hohlraum des Hohlkörpers untergebracht ist. In der erfindungsgemässen Vorrichtung sind zwei Kühleinrichtungen vorgesehen, wobei eine erste Kühleinrichtung an eine insgesamte erste Seitenfläche des Hohlkörpers angrenzend platziert ist und eine zweite Kühleinrichtung an eine insgesamte zweite Seitenfläche des Hohlkörpers angrenzend platziert ist. Eine derartige Platzierung von Kühleinrichtungen ermöglicht vorteilhaft eine Platzierung einer ersten Heizeinrichtung an eine insgesamte Oberfläche des Deckels angrenzend und eine zweite Heizeinrichtung an eine insgesamte Unterfläche des Hohlkörpers angrenzend.

Des Weiteren kann eine Mehrzahl von weiteren Kühleinrichtungen vorgesehen sein, wobei mindestens eine erste Kühleinrichtung in dem Material des Hohlkörpers untergebracht ist und mindestens eine zweite Kühleinrichtung in dem Hohlraum des Hohlkörpers untergebracht ist.

Eine Heizeinrichtung kann beispielsweise als elektrisch isolierte Heizdrähte enthaltender Metallblock ausgebildet sein. Anderseits kann eine Heizeinrichtung auch als von heißer Flüssigkeit durchströmte Hohlleitungen enthaltender Metallblock ausgeführt sein. In beiden Fällen ist eine möglichst große Kontaktfläche zwischen der Heizeinrichtung und einer Außenfläche des Hohlkörpers ausgebildet.

Eine Kühleinrichtung ist vorzugsweise als von kalter Flüssigkeit durchströmte Hohlleitungen aufweisender Metallblock ausgeführt. Auch dabei ist eine möglichst große Kontaktfläche zwischen der Heizeinrichtung und einer Außenfläche des Hohlkörpers vorzusehen.

Die erfindungsgemäße Vorrichtung wird im Folgenden anhand bevorzugter Ausführungsformen erläutert, die in den Figuren der Zeichnung dargestellt sind. Darin zeigen:
- Fig.1: eine erste bevorzugte Ausführungsform der erfindungsgemäßen Vorrichtung in einer Querschnittsansicht;
- Fig.2: die in Figur 1 dargestellte bevorzugte Ausführungsform der erfindungsgemäßen Vorrichtung ohne Heiz- und Kühleinrichtungen in einer Ansicht von schräg oben;
- Fig.3: eine zweite bevorzugte Ausführungsform der erfindungsgemäßen Vorrichtung in einer Querschnittsansicht.

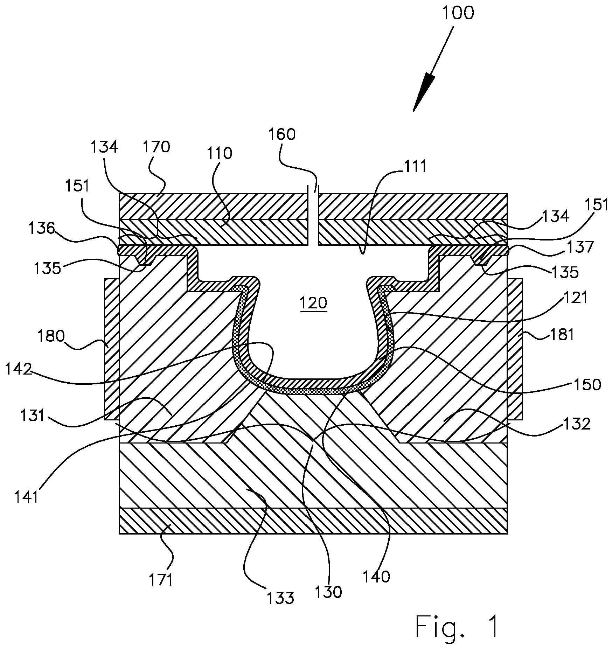

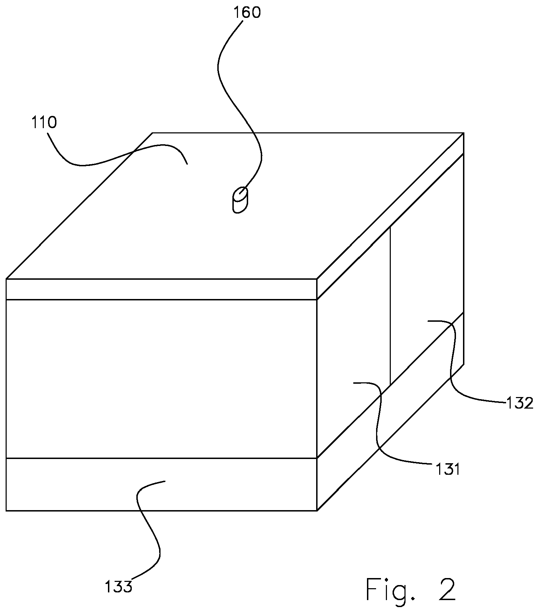

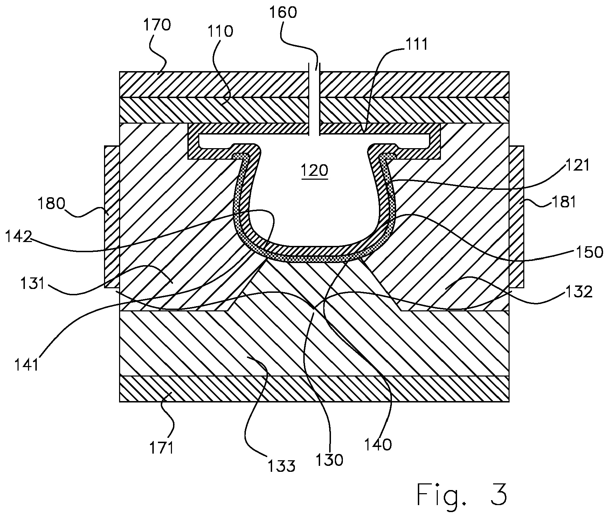

Die in den Figuren 1 und 2 und in Figur 3 dargestellten erfindungsgemäßen Vorrichtung 100 sind zum Verpressen von Kunststoff-Verbundwerkstoffen zur Herstellung von Formteilen 140 ausgelegt und enthalten eine mittels eines Deckels 110 gasdicht verschließbare, mit Gas befüllbare Hohlraum 120 eines Hohlkörpers 130.

Die Innenfläche 121 des Hohlraums 120 des Hohlkörpers 130 ist ausgebildet, um ein Lager für eine Außenfläche 141 eines Formteils 140 zu bilden, dessen Außenkontur an die Kontur der Innenfläche 121 des Hohlraums 120 des Hohlkörpers 130 angepasst ist.

Ein an die Innenfläche 142 des Formteils 140 angrenzendes Diaphragma 150 bildet dabei eine Übergangszone bzw. Schnittstelle zu dem Hohlraum 120 des Hohlkörpers 130.

Die Außenkontur des Formteils 140 entspricht der Kontur der Innenfläche 121 des Hohlraums 120 des Hohlkörpers 130, wobei die Abmessungen des Hohlkörpers 130 an die Abmessungen des Formteils angepasst sind. Das Volumen des massiven Teils des Hohlkörpers 130 entspricht etwa dem Vierfachen des Volumens des Hohlraums 120 des Hohlkörpers 130.

Der Hohlkörper 130 ist aus drei massiven Blöcken 131, 132, 133 hergestellt, wobei sich die Konturen der Innenflächen der einzelnen Blöcke 131, 132, 133 zu der Kontur der Innenfläche 121 des Hohlraums 120 des Hohlkörpers 130 ergänzen. Eine obere Grenzfläche eines den Deckel 110 nicht kontaktierenden dritten Blocks 133 grenzt dabei an die jeweils unteren Grenzflächen von zwei sich seitlich jeweils kontaktierenden Blöcken 131, 132 an, deren jeweilige dem dritten Block 133 ferne obere Grenzflächen dem Deckel 110 gegenüberstehen.

Die zwei sich jeweils seitlich kontaktierenden Blöcke 131, 132 weisen jeweils eine plane Außenkontur auf und bilden einen Hohlkörper 130 mit quaderförmiger Außenkontur. Jeder Block 131, 132, 133 ist dabei aus einem druckresistenten festen Material, im vorliegenden Fall Edelstahl hergestellt.

Der Hohlkörper 130 weist eine den Hohlraum 120 von einer Außenfläche des Blocks 131, 132 trennende, an den Deckel 110 angrenzende Dichtungszone 134 auf, deren Breite bemessen ist, um eine gasdichte Schnittstelle (Übergangsbereich) zwischen dem Hohlkörper 130 und dem Deckel 110 zu bilden. Die Dichtungszone 134 ist im Wesentlichen plan ausgebildet, weist indes im Bereich der Dichtungszone 134 eine als Aussparung des Hohlkörpers 130 ausgebildete Umlaufnut 135 auf.

Das Diaphragma 150 ist ausgebildet, um sich über die insgesamte Breite der Dichtungszone 134 zu erstrecken, und ist im Bereich der Umlaufnut 135 der Dichtungszone 134 mit einem Umlaufkeil 151 versehen, der dimensioniert ist, um die Umlaufnut 135 schlüssig auszufüllen. Sowohl das Diaphragma 150 als auch der Umlaufkeil 151 sind aus einem elastischen Kunststoffmaterial hergestellt.

Das Diaphragma 150 erstreckt sich somit in der in Figur 1 dargestellten Ausführungsform von einem ersten Punkt 136 der Außenwand des Blocks oberhalb der Dichtungszone 134 über den Hohlraum bis zu einem dem ersten Punkt 136 gegenüberliegenden zweiten Punkt 137 der Außenwand des Blockes.

Gemäß der in Figur 3 dargestellten alternativen Ausführungsform bildet das Diaphragma 150 unter teilweiser Angrenzung an das Formteil 140 und teilweiser Angrenzung an eine Innenfläche 111 des Deckels 110 eine in sich geschlossene Einheit.

Im Bereich des Deckels 110 ist eine Ventileinrichtung 160 für einen bidirektionalen Gas-Transfer zwischen einer ambienten Gasquelle und dem Inneren der Hohlraum 120 des Hohlkörpers 130 vorgesehen.

Zwei Heizeinrichtungen 170, 171 sind vorgesehen, wobei eine erste Heizeinrichtung 170 an eine insgesamte Oberfläche des Deckels 110 angrenzend platziert ist und eine zweite Heizeinrichtung 171 an eine insgesamte Unterfläche des Hohlkörpers 130 angrenzend platziert ist.

Des Weiteren sind zwei Kühleinrichtungen 180, 181 vorgesehen, wobei eine erste Kühleinrichtung 180 an eine insgesamte erste Seitenfläche des Hohlkörpers 130 angrenzend platziert ist und eine zweite Kühleinrichtung 181 an eine insgesamte zweite Seitenfläche des Hohlkörpers 130 angrenzend platziert ist.

Eine Heizeinrichtung 170, 171 ist als elektrisch isolierte Heizdrähte enthaltender Metallblock ausgebildet, und eine Kühleinrichtung 180, 181 ist als von kalter Flüssigkeit durchströmte Hohlleitungen aufweisender Metallblock ausgeführt.

## Patentansprüche

1. Vorrichtung (100) zum Verpressen von Kunststoff-Verbundwerkstoffen zur Herstellung von Formteilen (140), mit einem mittels eines Deckels (110) gasdicht verschließbaren, mit Gas befüllbaren Hohlraum (120) eines Hohlkörpers (130) und mit mindestens einer Heizeinrichtung zum Aufwärmen des Hohlkörpers, wobei eine Innenfläche (121) des Hohlraums (120) des Hohlkörpers (130) ausgebildet ist, um ein Lager für eine Außenfläche (141) eines Formteils (140) zu bilden, dessen Außenkontur an die Kontur der Innenfläche (121) des Hohlraums (120) des Hohlkörpers (130) anpassbar ist, und ein an eine Innenfläche (142) des Formteils (140) angrenzendes Diaphragma (150) eine Schnittstelle zu dem Hohlraum (120) des Hohlkörpers (130) bilden kann, **dadurch gekennzeichnet, dass** zwei Kühleinrichtungen (180, 181) vorgesehen sind, wobei eine erste Kühleinrichtung (180) an eine insgesamte erste Seitenfläche des Hohlkörpers (130) angrenzend platziert ist und eine zweite Kühleinrichtung (181) an eine insgesamte zweite Seitenfläche des Hohlkörpers (130) angrenzend platziert ist.

2. Vorrichtung (100) nach Anspruch 1, **dadurch gekennzeichnet, dass** die Außenkontur des Formteils (140) der Kontur der Innenfläche (121) des Hohlraums (120) des Hohlkörpers (130) entspricht.

3. Vorrichtung (100) nach einem der vorhergehenden Ansprüche, **dadurch gekennzeichnet, dass** die Abmessungen des Hohlkörpers (130) an die Abmessungen des Formteils (140) angepasst sind.

4. Vorrichtung (100) nach einem der vorhergehenden Ansprüche, **dadurch gekennzeichnet, dass** das Volumen des massiven Teils des Hohlkörpers (130) auf das zwei- bis vierfache des Volumens des Hohlraums (120) des Hohlkörpers (130) bemessen ist.

5. Vorrichtung (100) nach einem der Ansprüche 1 bis 4, **dadurch gekennzeichnet, dass** der Hohlkörper (130) aus einem massiven integralen Block hergestellt ist.

6. Vorrichtung (100) nach einem der Ansprüche 1 bis 4, **dadurch gekennzeichnet, dass** der Hohlkörper (130) aus einer Mehrzahl von massiven Blöcken (131, 132, 133) hergestellt ist, wobei sich die Konturen der Innenflächen der einzelnen Blöcke (131, 132, 133) zu der Kontur der Innenfläche (121) des Hohlraums (120) des Hohlkörpers (130) ergänzen.

7. Vorrichtung (100) nach einem der vorhergehenden Ansprüche, **dadurch gekennzeichnet, dass** der Hohlkörper (130) eine den Hohlraum (120) von einer Außenfläche des Blocks trennende, an den Deckel (110) angrenzende Dichtungszone (134) aufweist, deren Breite bemessen ist, um eine gasdichte Schnittstelle zwischen dem Hohlkörper (130) und dem Deckel (110) zu bilden.

8. Vorrichtung (100) nach Anspruch 7, **dadurch gekennzeichnet, dass** im Bereich der Dichtungszone (134) eine als Aussparung des Hohlkörpers (130) ausgebildete Umlaufnut (135) vorgesehen ist.

9. Vorrichtung (100) nach einem der vorhergehenden Ansprüche, **dadurch gekennzeichnet, dass** im Bereich des Hohlraumes (120) eine als Aussparung des Hohlkörpers ausgebildete Umlaufnut vorgesehen ist.

10. Vorrichtung (100) nach den Ansprüchen 7 bis 9, **dadurch gekennzeichnet, dass** das Diaphragma (150) ausgebildet ist, um sich über die insgesamte Breite der Dichtungszone (134) zu erstrecken.

11. Vorrichtung (100) nach den Ansprüchen 7 und 10, **dadurch gekennzeichnet, dass** das Diaphragma (150) mit einem Umlaufkeil (151) versehen ist, der dimensioniert ist, um die Umlaufnut (135) schlüssig auszufüllen.

12. Vorrichtung (100) nach einem der Ansprüche 7 bis 11, **dadurch gekennzeichnet, dass** der Hohlkörper (130) eine den Hohlraum (120) von der Außenfläche des Blocks trennende Wandung enthält, deren Dicke mindestens der Breite der Dichtungszone (134) entspricht.

13. Vorrichtung (100) nach einem der vorhergehenden Ansprüche, **dadurch gekennzeichnet, dass** das Diaphragma (150) aus einem elastischen Kunststoffmaterial hergestellt ist.

14. Vorrichtung (100) nach einem der Ansprüche 7 bis 13, **dadurch gekennzeichnet, dass** ein Querschnitt des Diaphragmas (150) sich von einem ersten Punkt (136) der Außenwand des Blocks oberhalb der Dichtungszone (134) über den Hohlraum (120) bis zu einem dem ersten Punkt (136) gegenüberliegenden zweiten Punkt (137) der Außenwand des Blockes erstreckt.

15. Vorrichtung (100) nach einem der Ansprüche 1 bis 13, **dadurch gekennzeichnet, dass** ein Diaphragma (150) unter teilweiser Angrenzung an das Formteil (140) und teilweiser Angrenzung an eine Innenfläche (111) des Deckels (110) eine in sich geschlossene Einheit bildet.

16. Vorrichtung (100) nach einem der vorhergehenden Ansprüche, **dadurch gekennzeichnet, dass** im Bereich des Deckels (110) eine Ventileinrichtung (160) für einen bidirektionalen Gas-Transfer zwischen einer ambienten Gasquelle und dem Inneren des Hohlraums des Hohlkörpers vorgesehen ist.

## Claims

1. Device (100) for pressing composite plastics materials for the production of moulded parts (140), with a cavity (120) of a hollow body (130) that can be closed in a gastight manner by means of a cover (110) and can be filled with gas and with at least one heating unit for heating up the hollow body, wherein an inner surface (121) of the cavity (120) of the hollow body (130) is designed to form a bearing for an outer surface (141) of a moulded part (140), the outer contour of which can be adapted to the contour of the inner surface (121) of the cavity (120) of the hollow body (130), and a diaphragm (150), which is adjacent to an inner surface (142) of the moulded part (140), can form an interface with the cavity (120) of the hollow body (130), **characterized in that** two cooling units (180, 181) are provided, wherein a first cooling unit (180) is placed adjacent to an altogether first side face of the hollow body (130) and a second cooling unit (181) is placed adjacent to an altogether second side face of the hollow body (130) .

2. Device (100) according to Claim 1, **characterized in that** the outer contour of the moulded part (140) corresponds to the contour of the inner surface (121) of the cavity (120) of the hollow body (130).

3. Device (100) according to one of the preceding claims, **characterized in that** the dimensions of the hollow body (130) are adapted to the dimensions of the moulded part (140).

4. Device (100) according to one of the preceding claims, **characterized in that** the volume of the solid part of the hollow body (130) is set to be two to four times the volume of the cavity (120) of the hollow body (130).

5. Device (100) according to one of Claims 1 to 4, **characterized in that** the hollow body (130) is produced from a solid integral block.

6. Device (100) according to one of Claims 1 to 4, **characterized in that** the hollow body (130) is produced from a plurality of solid blocks (131, 132, 133), wherein the contours of the inner surfaces of the individual blocks (131, 132, 133) complement one another to form the contour of the inner surface (121) of the cavity (120) of the hollow body (130).

7. Device (100) according to one of the preceding claims, **characterized in that** the hollow body (130) has a sealing zone (134), which separates the cavity (120) from an outer surface of the block, is adjacent to the cover (110) and the width of which is set to form a gastight interface between the hollow body (130) and the cover (110).

8. Device (100) according to Claim 7, **characterized in that** a peripheral groove (135), formed as a clearance in the hollow body (130), is provided in the region of the sealing zone (134).

9. Device (100) according to one of the preceding claims, **characterized in that** a peripheral groove, formed as a clearance in the hollow body, is provided in the region of the cavity (120).

10. Device (100) according to Claims 7 to 9, **characterized in that** the diaphragm (150) is designed to extend over the entire width of the sealing zone (134).

11. Device (100) according to Claims 7 and 10, **characterized in that** the diaphragm (150) is provided with a peripheral wedge (151), which is dimensioned to fill the peripheral groove (135) fully.

12. Device (100) according to one of Claims 7 to 11, **characterized in that** the hollow body (130) includes a wall, which separates the cavity (120) from the outer surface of the block and the thickness of which corresponds at least to the width of the sealing zone (134).

13. Device (100) according to one of the preceding claims, **characterized in that** the diaphragm (150) is produced from an elastic plastics material.

14. Device (100) according to one of Claims 7 to 13, **characterized in that** a cross section of the diaphragm (150) extends from a first point (136) of the outer wall of the block above the sealing zone (134) over the cavity (120) to a second point (137) of the outer wall of the block that is opposite from the first point (136).

15. Device (100) according to one of Claims 1 to 13, **characterized in that** a diaphragm (150) forms a self-contained unit, while being partly adjacent to the moulded part (140) and partly adjacent to an inner surface (111) of the cover (110).

16. Device (100) according to one of the preceding claims, **characterized in that** a valve unit (160) for a bidirectional gas transfer between an ambient gas source and the interior of the cavity of the hollow body is provided in the region of the cover (110) .

## Revendications

1. Dispositif (100) d'assemblage par compression de matériaux composites en matière plastique pour la fabrication de pièces moulées (140), comprenant une cavité (120) d'un corps creux (130) pouvant être, au moyen d'un couvercle (110), fermée de manière étanche aux gaz et pouvant être remplie de gaz, et comprenant au moins un équipement de chauffage destiné à chauffer le corps creux, cependant que
une surface intérieure (121) de la cavité (120) du corps creux (130) est conçue pour constituer un logement pour une surface extérieure (141) d'une pièce moulée (140) dont le contour extérieur peut être adapté au contour de la surface intérieure (121) de la cavité (120) du corps creux (130), et qu'un diaphragme (150) adjacent à une surface intérieure (142) de la pièce moulée (140) peut constituer une interface vers la cavité (120) du corps creux (130), **caractérisé en ce que** deux équipements de refroidissement (180, 181) sont prévus, cependant qu'un premier équipement de refroidissement (180) est placé de manière adjacente à une globalement première surface latérale du corps creux (130) et qu'un deuxième équipement de refroidissement (181) est placé de manière adjacente à une globalement deuxième surface latérale du corps creux (130).

2. Dispositif (100) selon la revendication 1, **caractérisé en ce que** le contour extérieur de la pièce moulée (140) correspond au contour de la surface intérieure (121) de la cavité (120) du corps creux (130).

3. Dispositif (100) selon une des revendications précédentes, **caractérisé en ce que** les dimensions du corps creux (130) sont adaptées aux dimensions de la pièce moulée (140).

4. Dispositif selon une des revendications précédentes, **caractérisé en ce que** le volume de la partie massive du corps creux (130) a des dimensions comprises entre le double et le quadruple de celles du volume de la cavité (120) du corps creux (130).

5. Dispositif (100) selon une des revendications de 1 à 4, **caractérisé en ce que** le corps creux (130) est généré à partir d'un bloc massif intégral.

6. Dispositif (100) selon une des revendications de 1 à 4, **caractérisé en ce que** le corps creux (130) est généré à partir d'une pluralité de blocs massifs (131, 132, 133), cependant que les contours des surfaces intérieures des différents blocs (131, 132, 133) se complètent de manière à former le contour de la surface intérieure (121) de la cavité (120) du corps creux (130).

7. Dispositif (100) selon une des revendications précédentes, **caractérisé en ce que** le corps creux (130) comporte une zone d'étanchéité (134) qui sépare la cavité (120) d'une surface extérieure du bloc et est juxtaposée au couvercle (110) et dont la largeur est dimensionnée de manière à constituer une interface étanche aux gaz entre le corps creux (130) et le couvercle (110).

8. Dispositif (100) selon la revendication 7, **caractérisé en ce que**, dans la région de la zone d'étanchéité (134), une rainure circonférentielle (135) réalisée sous forme d'évidement du corps creux (130) est prévue.

9. Dispositif (100) selon une des revendications précédentes, **caractérisé en ce que**, dans la région de la cavité (120), une rainure circonférentielle réalisée sous forme d'évidement du corps creux est prévue.

10. Dispositif (100) selon les revendications de 7 à 9, **caractérisé en ce que** le diaphragme (150) est conçu pour s'étendre sur la surface globale de la zone d'étanchéité (134).

11. Dispositif (100) selon les revendications 7 et 10, **caractérisé en ce que** le diaphragme (150) est pourvu d'une clavette circonférentielle (151) dimensionnée de manière à emplir par liaison la rainure circonférentielle (135).

12. Dispositif (100) selon les revendications de 7 à 11, **caractérisé en ce que** le corps creux (130) comporte une paroi qui sépare la cavité (120) de la surface extérieure du bloc et dont la largeur correspond au moins à la largeur de la zone d'étanchéité (134).

13. Dispositif (100) selon une des revendications précédentes, **caractérisé en ce que** le diaphragme (150) est fabriqué à partir d'une matière plastique élastique.

14. Dispositif (100) selon une des revendications de 7 à 13, **caractérisé en ce qu'**une coupe transversale du diaphragme (150) s'étend d'un premier point (136) de la paroi extérieure du bloc au-dessus de la zone d'étanchéité (134) en passant par-dessus la cavité (120) jusqu'à un deuxième point (137) situé à l'opposé du premier point (136).

15. Dispositif (100) selon une des revendications de 1 à 13, **caractérisé en ce qu'**un diaphragme (150) constitue, tout en étant partiellement juxtaposé à la pièce moulée (140) et partiellement juxtaposé à une surface intérieure (111) du couvercle (110), une unité fermée en soi.

16. Dispositif (100) selon une des revendications précédentes, **caractérisé en ce que**, dans la zone du couvercle (110), un équipement de soupape (160) est prévu pour un transfert bidirectionnel de gaz entre une source de gaz ambiant et l'intérieur de la cavité du corps creux.
